**Europäisches Patentamt**

**European Patent Office**

**Office européen des brevets**

(19)

(11) Veröffentlichungsnummer : **0 506 669 B1**

(12) # EUROPÄISCHE PATENTSCHRIFT

(45) Veröffentlichungstag der Patentschrift :
**08.02.95 Patentblatt 95/06**

(51) Int. Cl.$^6$ : **G01D 5/249**, G01D 5/244

(21) Anmeldenummer : **90916038.4**

(22) Anmeldetag : **14.11.90**

(86) Internationale Anmeldenummer :
**PCT/DE90/00870**

(87) Internationale Veröffentlichungsnummer :
**WO 91/10113 11.07.91 Gazette 91/15**

(54) **GEBER ZUR ZYLINDERERKENNUNG.**

(30) Priorität : **23.12.89 DE 3942800**

(43) Veröffentlichungstag der Anmeldung :
**07.10.92 Patentblatt 92/41**

(45) Bekanntmachung des Hinweises auf die
Patenterteilung :
**08.02.95 Patentblatt 95/06**

(84) Benannte Vertragsstaaten :
**DE FR GB**

(56) Entgegenhaltungen :
**FR-A- 2 551 203**
**IEEE Transactions on Instrumentation and
Measurement, vol. IM-36, no. 4, December
1987, New York, US, pages 950-955; Emil M.
Petriu: "Absolute-type position transducers
using a pseudorandom encoding"**

(73) Patentinhaber : **ROBERT BOSCH GMBH
Postfach 30 02 20
D-70442 Stuttgart (DE)**

(72) Erfinder : **LÖFFLER, Alf
Bergweg 6
D-7145 Markgröningen-Talhausen (DE)**

EP 0 506 669 B1

## Beschreibung

### Stand der Technik

Die Erfindung geht aus von einem Geber zur Zylindererkennung nach der Gattung des Anspruchs 1.

Für die Steuerung und Regelung moderner Brennkraftmaschinen, beispielsweise zur Festlegung des Zündzeitpunktes oder der Festlegung des Einspritzzeitpunktes für den Kraftstoff ist es erforderlich, die Position der einzelnen Zylinder zu erkennen. Insbesondere ist es notwendig festzustellen, welcher Nocken zu einem gegebenen Zeitpunkt einen Verdichtungshub ausführt und wann er den oberen Totpunkt erreicht. Bei Ottomotoren mit mechanischem Verteiler ist die Zündung fest eingestellt.

Bei magnetventilgesteuerten Einspritzanlagen, insbesondere bei Pumpe-Düse-Systemen ist es notwendig, die Ansteuerung der Magnetventile mit der Ventilsteuerung der Zylinder so zu synchronisieren, daß die Einspritzung des Kraftstoffs in den Zylinder jeweils kurz vor dem Ende des Verdichtungshubs erfolgt. Dazu ist es notwendig, die Position dieses Zylinders zu kennen. Beim Start der Brennkraftmaschine soll diese Erkennung möglichst schnell durchgeführt werden, daß bereits beim ersten Verdichtungshub eine Einspritzung erfolgen kann. Dazu ist es erforderlich, die Position der Nockenwelle möglichst schnell, d.h. nach einer möglichst geringen Drehung zu erkennen.

Aus Kosten- und Zuverlässigkeitsgründen ist es notwendig, mit einer möglichst kleinen Zahl von Sensoren auszukommen.

Die Erkennung der Position der Nockenwelle, die eine Synchronisation ermöglicht, wird normalerweise durch das Anbringen einer Bezugsmarke oder durch die Modifikation vorhandener Segmentmarken auf einer mit der Nockenwelle oder aber auch der Kurbelwelle verbundenen Segmentscheibe gelöst. So wird in der DE-OS 30 11 822 eine Bezugsmarkenerkennung vorgeschlagen, bei der die Bezugsmarke als fehlender oder als abgeschrägter Zahn einer mit der Nockenwelle verbundenen Segmentscheibe ausgebildet ist. Dabei wird diese Scheibe mittels eines induktiven Aufnehmers abgetastet und dessen Ausgangssignal zur Erkennung der Bezugsmarke ausgewertet. Diese Vorrichtung hat jedoch den Nachteil, daß beim Start der Brennkraftmaschine bis zu 2 Umdrehungen der Kurbelwelle erfolgen müssen, bis die Bezugsmarke vom Sensor erfaßt wird, bzw. die Nockenwellenstellung erkannt wird. Im Grenzfall, unter schlechten Startbedingungen, kann damit ein Start undurchführbar werden.

Ein digitaler Positionsgeber zur Umsetzung der relativen Lage zweier Teile zueinander in ein elektrisches Signal, mit dem eine Positionserkennung durchgeführt werden kann, ist aus der DE-OS 30 35 774 bekannt. Bei dieser Vorrichtung befinden sich auf dem einen Teil eine Anzahl von Markierungen und auf dem anderen Teil eine geringere Anzahl von jeweils einer Markierung zugeordneten Aufnahmeelementen. Dabei sind die Markierungen und die Aufnahmeelemente jeweils in einer Reihe in Verschiebungsrichtung der Teile zueinander angeordnet, wobei die Folge der Markierungen so ausgebildet ist, daß an den Aufnahmeelementen für jede Position ein unterschiedliches Bit-Muster anliegt. Diese bekannte Vorrichtung weist jedoch mehrere Aufnahmeelemente auf und ist daher sehr aufwendig.

Eine Einrichtung zur Zylindererkennung bzw. zur Bestimmung der Lage von Kurbel- und Nockenwelle einer Brennkraftmaschine ist auch aus der DE-OS 34 31 232 bekannt. Bei dieser Einrichtung weist eine mit der Kurbelwelle umlaufende Scheibe eine Vielzahl gleichartiger Markierungen auf und eine mit der Nockenwelle rotierende Scheibe mehrere, der Zylinderzahl entsprechende unterschiedliche Markierungen, wobei die Zwischenräume zwischen diesen Markierungen unterschiedlich lang sind. Durch diese Anordnung läßt sich eine charakteristische Impulsfolge bilden, anhand derer die Winkellage der Nockenwelle bestimmt werden kann und damit auch eine Zylindererkennung durchführbar ist.

Da bei der bekannten Einrichtung die Anzahl der Markierungen, die zur Erstellung des charakteristischen Signales benötigt werden, der Zahl der Zylinder der Brennkraftmaschine entsprechen soll, ist auch die Zahl der charakteristischen Impulse pro Umdrehung der Nockenwelle festgelegt. Daher ist durch diese Rahmenbedingung fest vorgegeben, nach welcher minimalen Winkelumdrehung die Stellung der Nockenwelle erkannt werden kann.

### Vorteile der Erfindung

Der erfindungsgemäße Geber zur Zylindererkennung mit den Merkmalen des Anspruchs 1 hat den Vorteil, daß er einen einfachen Aufbau aufweist und die für die Bezugsmarkenerkennung erforderliche Zeit bzw. die entsprechend erforderlichen Kurbelwellenumdrehungen gegenüber dem Stand der Technik verkürzt werden. Damit läßt sich beispielsweise bei magnetventilgesteuerten Einspritzsystemen die Dauer bis zur ersten Einspritzung verkürzen und damit insbesondere unter Grenzbedingungen die Startfähigkeit verbessern.

Besonders vorteilhaft ist, daß zur Bezugsmarkenerkennung die bereits heute vielfach verwendeten zwei

2

Impulssensoren benutzt werden können, dies führt zu einer sehr kostengünstigen Lösung. Weiterhin ist vorteilhaft, daß sich das gesamte System auf einfache Weise mit Steuerungssystemen kombinieren läßt, die aus Winkel- oder Winkelgeschwindigkeitsinformationen Steuerzeiten für die Einspritzventile berechnen und den Förderbeginn in zeitlichem Abstand oder Winkelabstand von einer Bezugsmarke steuern.

Zusätzlich kann der über der Nockenwelle angebrachte Geber bei Ausfall des über der Kurbelwelle angebrachten Hauptdrehzahlgebers auch alleine die Positionserkennung durchführen und ein dynamisch hochwertiges Ersatzdrehzahlsignal liefern, wenn eine Darstellung des Codes mit dem Phasenmodulationsverfahren erfolgt.

Ein weiterer Vorteil des erfindungsgemäßen Gebers zur Zylindererkennung besteht darin, daß sich durch Verwendung eines Codes mit geringerer Bit-Zahl eine Vereinfachung des Aufbaus des Sensors und der Belastung des für die Auswertung vorgesehenen Mikroprozessors ergibt, während durch Verwendung eines Codes mit höherer Bit-Zahl eine Vergrößerung der Zahl der zu erkennenden Positionen möglich ist und sich gleichzeitig die Zeit bzw. der erforderliche Drehwinkel bis zur Erkennung der Lage der Nockenwelle verkürzt.

Zeichnung

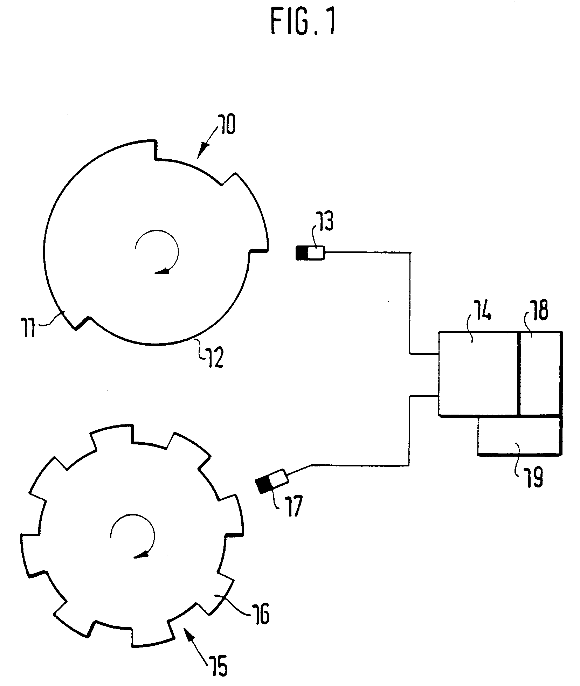

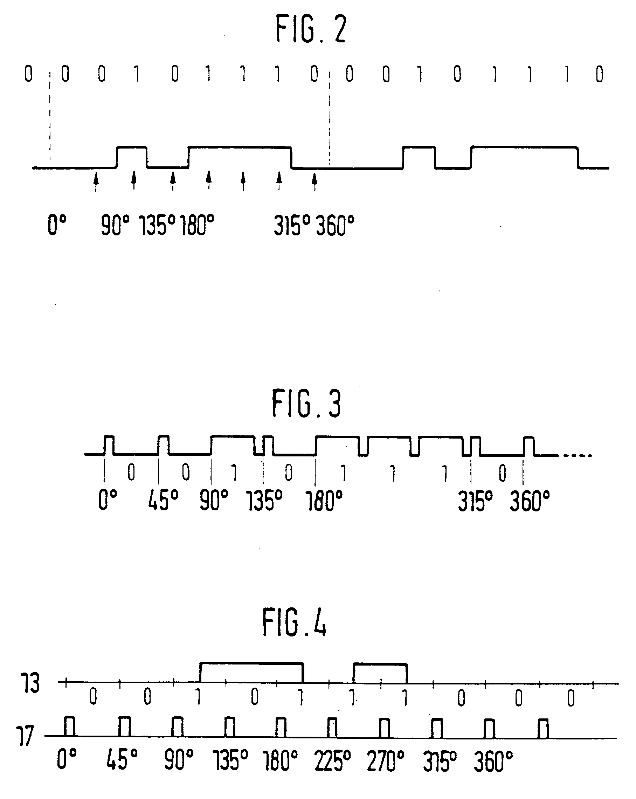

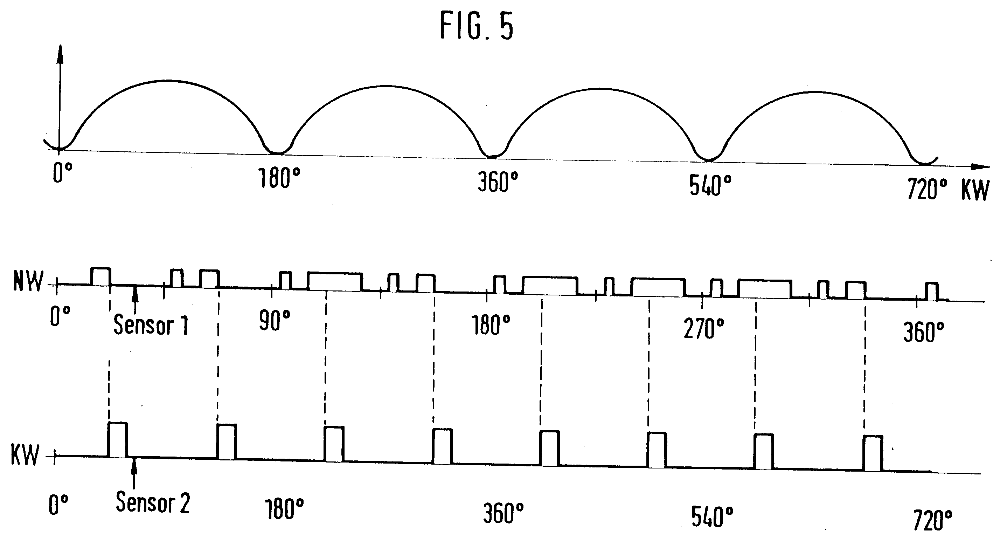

Die Erfindung ist für einen Positionsgeber mit acht Stellungen in der Zeichnung dargestellt und wird in der nachfolgenden Beschreibung näher erläutert. Es zeigen: Figur 1 eine Übersichtsdarstellung des Gesamtsystems mit einem Positionsgeber für acht unterschiedliche Stellungen, Figur 2 die Pseudo-Random-Folge der Länge $2^3=8$ sowie das zugehörige Impulsdiagramm über dem Nockenwellenwinkel als Abwicklung, Figur 3 zeigt die Darstellung der in Figur 2 abgebildeten Pseudo-Random-Folge durch Phasenmodulation und Figur 4 zeigt die Darstellung derselben Folge durch Coded-Mark-Inversion, in Figur 5 ist ein Beispiel für ein Winkel-Zeit-System mit Zylindererkennung mit Pseudo-Random-Code dargestellt.

Beschreibung der Ausführungsbeispiele

Figur 1 zeigt eine Anordnung, bei der eine mit der Nockenwelle verbundene Geberscheibe 10 unterschiedliche Markierungen 11 und 12, die beispielsweise in Form von Vertiefungen oder Erhöhungen auf dem Umfang der Scheibe erhalten werden, aufweist. Diese Geberscheibe, die mit der Nockenwelle starr verbunden ist, wird von einem Sensor 13, der mit einer Auswerteschaltung 14 verbunden ist, abgetastet.

Eine weitere Scheibe 15 ist mit der Kurbelwelle verbunden, sie weist an ihrem Umfang Bezugsmarken 16 auf. Die Scheibe 15 wird von einem Sensor 17 abgetastet, der ebenfalls mit der Auswerteschaltung 14 verbunden ist.

Durch Aufbringen eines geeigneten Pseudo-Random-Codes in Form von Vertiefungen oder Erhöhungen auf dem Umfang der mit der Nockenwelle fest verbundenen Scheibe 10, können verschiedene Positionen eindeutig gekennzeichnet werden. Anstelle von Vertiefungen oder Erhöhungen können auch Markierungen mit unterschiedlichen magnetischen Eigenschaften oder optisch erkennbare Markierungen eingesetzt werden. Auch jedes andere physikalische Prinzip das es gestattet Markierungen, die einer festen Winkelposition zugeordnet sind, zu erkennen, kann als Sensor eingesetzt werden.

Als Sensoren 13 bzw. 17 können beliebige Abstands- oder Näherungssensoren, beispielsweise Induktivsensoren oder Hall-Sensoren verwendet werden.

Aus dem Zusammenspiel der am Sensor 13 abgetasteten Nockenwellensignale und der vom Sensor 17 abgetasteten Kurbewellensignalen wird in der Auswerteschaltung 14 durch eine geeignete Auswertemethode eine Signalabfolge ermittelt, die einer wählbaren Pseudo-Random-Folge der gewählten Länge entspricht.

In Figur 2 ist eine solche Pseudo-Random-Folge der Länge 8 sowie ein zugehöriges Impulsdiagramm über den Nockenwellenwinkel dargestellt. Diese Pseudo-Random-Folge wird in der Auswerteanordnung 14, die ein oder mehrere Schiebe-Register 18 enthält, zur Weiterverarbeitung in ein Register eingelesen. Wird als Register ein 3-Bit-Register gewählt, können bis zu acht Positionen erkannt werden die Auswertung kann selbstverständlich auch durch einen Rechner 19 oder eine andere Logik erfolgen, die geeignet sind den zuletzt gelesenen Wert zu speichern und mit einem Referenzwert zu vergleichen. Die Tabelle 1 gibt für das Beispiel eines 3-Bit-Registers und die Pseudo-Random-Folge aus Figur 2 die Möglichkeiten der verschiedenen Positionserkennungen an. Dabei ist in Spalte 1 die Zahl der zu erkennenden Positionen angegeben, in Spalte 2 der Registerinhalt, in Spalte 3, die Positionsnummer und in Spalte 4 die frühest mögliche Zylindererkennung nach Grad Nockenwellenwinkel angegeben. Die Register können diskret aufgebaut und mit bekannten logischen Bausteinen verknüpft sein oder auch die Register eines Mikrorechners sein, die mit einem entsprechenden Algorithmus ausgewertet werden.

Wenn bis zu acht Positionen erkannt werden sollen, weisen die Positionen einen Abstand von 360° : 8 = 45° NW auf. Spätestens wenn drei Positionen im Register abgespeichert sind, also nach 135° bis 180° NW ist die Lage der Nockenwelle erkannt.

Wenn nur sechs bzw. fünf bzw. vier Positionen erkannt werden sollen, verschiebt sich die früheste Erkennung nach Grad NW entsprechend den in Tabelle 1 angegebenen Werten.

Der Code mit vier Positionen und 3-Bit-Register entspricht der normalerweise allein verwendeten Bezugsmarke. Damit ist eine Erkennung nach 207° bis 360° NW möglich. Auch bei diesem Code ergibt sich durch Verwendung der Information eines Kurbelwellengebers 17 eine Verbesserung, da durch die zusätzliche Verwertung dieser Information bereits nach dem Einlesen von drei Nullen die Position vier erkannt wird.

Bei Verwendung eines Codes mit höherer Bit-Zahl, z.B. mit dem in Tabelle 2 ist ein solches Beispiel für einen 4-Bit-Code dargestellt, läßt sich der Winkel bis zur ersten eindeutigen Erfassung der Nockenwellenposition weiter verkleinern, jedoch steigen damit auch die Auflösungsanforderungen an den Sensor, da auf der Nockenwellenscheibe 10 entsprechend mehr Marken untergebracht und vom Sensor 13 abgetastet werden müssen.

In Tabelle 2 sind Beispiele für 4-Bit-Pseudo-Random-Folgen mit verschiedenen Periodenlängen aufgetragen. Dabei ist in der ersten Spalte die Periodenlänge angegeben, in der zweiten Spalte die zugehörige Code-Folge und in der dritten Spalte die Erkennung nach Grad NW angegeben.

Tabelle 3 zeigt schließlich die Verwendung eines 2-Bit-Systems, das eine einfache Möglichkeit zur Lageerkennung angibt. Auch beim 2-Bit-System läßt sich eine Verbesserung erreichen, wenn eine zusätzliche Bezugsmarke verwendet wird.

Pseudo-Random-Codes größerer Länge sind in der mathematischen Literatur veröffentlicht und müssen daher hier nicht angegeben werden. Sie lassen sich bei höheren Positionszahlen verwenden und ebenfalls wie im Beispiel Tabelle 1 oder Tabelle 2 angegeben, verkürzen. Die Auswertung erfolgt ebenfalls durch Vergleich mit vorgegebenen Tabellenwerten oder in einem Codegenerator erzeugten Folgen.

Die in den Tabellen 1 bis 3 angegebenen Pseudo-Random-Folgen lassen sich besonders kostengünstig mit den heute bereits im Kraftfahrzeug verwendeten Drehzahlsensoren sowie den zugehörigen Auswerteschaltungen erhalten. Um mit solchen Sensoren die gewünschten Pseudo-Random-Codes lesen zu können, muß eine Darstellung des gewünschten Codes auf dem Scheibenumfang gewählt werden, die es gestattet, 0 oder 1 aus Flanken von Impulsen zu erkennen. Hierzu können die bekannten Modulationsverfahren der Nachrichtentechnik verwendet werden. In den Figuren 3 und 4 sind zwei Beispiele für die Darstellung des Codes mit zwei verschiedenen Modulationsverfahren angegeben.

In Figur 2 ist ein Beispiel eines Codes mit acht Positionen nach dem No-Return-to Zero (NRZ)-Verfahren dargestellt.

Im Beispiel nach Figur 3 wird angegeben, wie der gleiche 3-Bit-Code mit den acht Positionen pro Nockenwellenumdrehung von Figur 2 mit dem Phasenmodulationsverfahren erhalten wird. Zum Lesen des Codes nach Figur 2 sind zwei Drehzahlsensoren erforderlich, die die Geberräder abtasten und je eine Impulsfolge liefern. Diese werden so montiert, daß die aufsteigende Flanke, die vom ersten Sensor detektiert wird, stets nach einer abfallenden Flanke für einen 0-Impuls und vor einer steigenden Flanke des nächsten 1-Impulses liegen.

In Figur 4 ist ein weiteres Beispiel für die Darstellung des Codes der Figur 2 dargestellt. Bei dieser Darstellung erfolgt die Entscheidung auf 0 oder 1 dadurch, daß bei einer 1 zwischen zwei Impulsen des Sensors 17 der Sensor 13 seinen Zustand ändert und bei einer 0 der Sensor 13 seinen Zustand nicht ändert.

Für das Verständnis der Figur 3 sind folgende Zusammenhänge nötig:

N = Anzahl der Positionen
∅ = Durchmesser der Scheibe
d = Abstand der Positionen
a = Länge des 0-Impulses
b = Länge des 1-Impulses
S = Abstand zwischen den beiden Sensoren.

Weiterhin gelten die Beziehungen:

$$N \times d = \pi \times \emptyset$$

(Periodenlänge)

$$S = m \times d + x$$
$$a < x < b = d - a$$
$$b = d - a$$

Die Phasenmodulation hat den Vorteil, daß beim Ausfall des Taktsensors der gleichzeitig der Hauptdrehzahlsensor sein kann, aus den Zeitdauern zwischen jeweils einer aufsteigenden und abfallenden Flanke auf 0 oder 1 erkannt werden kann, wenn die Drehzahländerungen beim Durchlauf eines Inkrements klein sind im Vergleich zum Verhältnis der Längen von 0- und 1-Impuls. Außerdem liefert in diesem Fall der an der Nockenwelle angebrachte Sensor durch Auswertung der aufsteigenden Flanke ein dynamisch hochwertiges Ersatz-

4

drehzahlsignal zum Kurbelwellensensorsignal. Diese Information kann auch dazu verwendet werden, Drehzahlsignale auf Plausibilität zu überprüfen, um z.B. einen defekten Sensor zu erkennen.

In Figur 4 ist ein weiteres Verfahren zur Darstellung des aus Figur 2 bekannten 3-Bit-Codes mit acht Positionen pro Nockenwellenumdrehung nach dem sogenannten Coded-Marc-Inversion-Verfahren (CMI) dargestellt. Da auf dem Umfang der Geberscheibe nur zwei Impulse unterschiedlicher Länge dargestellt werden müssen, sind die Anforderungen an den Sensor erheblich geringer als beim zuvor beschriebenen Phasenmodulationsverfahren. Erkannt wird bei diesem Verfahren eine 0 dadurch, daß zwischen zwei Takt-Impulsen des zweiten Sensors keine Flanke des ersten Positionssensors dedektiert wird und eine 1 durch eine steigende oder fallende Flanke des Positionssensors zwischen zwei Takt-Impulsen gekennzeichnet ist. Bei einem Ausfall des Taktsensors 17 muß bei der hier beschriebenen Methode eine volle Kurbelwellenumdrehung ausgewertet werden, bevor eine Drehzahlinformation vorliegt, mit deren Hilfe dann aus den Längen der Impulse wiederum die Position bestimmt werden kann. Voraussetzung für die Drehzahlbestimmung bei Ausfall des Sensors 17 ist jedoch, daß die Drehzahländerung klein bleibt gegenüber dem Verhältnis der Längen der Impulse bzw. der Impulse und Impulspausen.

Durch den Einbau einer zusätzlichen Zeitmeßstrecke läßt sich das geschilderte Verfahren mit einem System zur Spritzbeginnsteuerung und Zumessung der Menge über die Zeit (Winkel-Zeit-System) kombinieren. In Figur 5 ist ein solches Winkel-Zeit-System dargestellt.

Figur 5 zeigt ein Winkel-Zeit-System mit Zylindererkennung am Beispiel eines 4-Zylinder-Motors und acht zu erkennenden Positionen. Im oberen Teil der Figur ist der Verlauf der Drehzahl über dem Kurbelwinkel eingezeichnet, mit den jeweiligen Spritzbeginnbereichen.

Darunter ist das vom Sensor 1, der die Nockenwellenscheibe abtastet, gelieferte Impulsdiagramm über der Zeit aufgetragen. Mit a ist die Meßstrecke zwischen zwei aufsteigenden Flanken der Nockenwellenimpulse angegeben, mit b eine alternative Meßstrecke über einen größeren Winkelbereich. Mit 0 und 1 sind die Stellen bezeichnet, an denen jeweils auf 0 bzw. 1 erkannt wird. Dabei ist das Impulsdiagramm für einen Pseudo-Random-Code entsprechend Figur 2 angegeben.

Die zur Bestimmung der Momentandrehzahl benötigte Meßstrecke a ist z.B. durch zwei aufsteigende Flanken gekennzeichnet, die durch keinen Kurbelwellenimpuls unterbrochen werden. Alternativ kann auch die längere Meßstrecke b verwendet werden. Diese beginnt mit der ersten aufsteigenden Flanke nach der Meßstrecke a und endet mit der zweiten darauffolgenden aufsteigenden Flanke. Als Meßstrecke läßt sich aber auch die Impulslänge eines 1-Impulses oder eines 0-Impulses verwenden.

Im unteren Teil der Figur 5 ist ein vom Sensor 17, der die Kurbelwelle bzw. ein mit der Kurbelwelle verbundenes Impulsrad abtastet geliefertes Impulsdiagramm, über dem Kurbelwinkel aufgetragen. Dabei ist mit der Markierung SB-Timer der Punkt markiert, an dem die Zeitsteuerung für den Spritzbeginn gestartet wird.

Prinzipiell besteht auch die Möglichkeit, eine geeignete Pseudo-Random-Folge wie sie aus Figur 2 bekannt ist, mit einer auf der Nockenwelle befestigten Geberscheibe und einem einzigen Sensor, der diese mit der Nockenwelle umlaufenden Scheibe abtastet, zu erhalten. Dazu wird die Oberfläche der Scheibe mit den Markierungen versehen, die in Figur 1 dargestellt werden.

Sind die Markierungen Bereiche mit unterschiedlichen magnetischen Eigenschaften oder auch Erhöhungen bzw. Vertiefungen, dann liefert der Sensor beispielsweise ein Induktiv-Sensor eine spezielle Pulsfolge, bei der die Signalhöhe davon abhängt, was für eine Markierung gerade am Sensor vorbeiläuft.

Sind Markierungen mit zwei unterschiedlichen Eigenschaften vorgesehen, so kann in einer Auswerteschaltung jeder Marke mit der einen Eigenschaft eine logische 0, und jeder Marke mit der anderen Eigenschaft eine logische 1 zugeordnet werden.

Mit der in Figur 1 angegebenen Markenverteilung läßt sich auch mit einem einzigen Sensor eine Pseudo-Random-Folge nach Figur 2, nämlich ...00101110... erzeugen und zur Weiterverarbeitung, also zur Zylindererkennung verwenden.

Die dargestellten Ausführungsbeispiele, lassen sich für beliebige andere z.B. aus der Magnetbandaufzeichnungstechnik bekannte Verfahren ebenfalls darstellen. Ebenso lassen sich Pseudo-Random-Folgen größerer Länge anwenden, auch können andere Modulationsverfahren als die in Figur 3 und Figur 4 beschriebenen, verwendet werden.

Tabelle 1

Beispiel: N = 3   Pseudo-Random-Folge:

...    0   0 0 1 0 1 1 1 0   0 0 1 0 1 1 1 0    ...

Periodenlänge

= 360° NW

| | Register-inhalt | Pos.-Nr. | Erkennung nach ° NW |
|---|---|---|---|
| 8 Positionen | 001 | 1 | 135 – 180° |
| | 010 | 2 | |
| | 101 | 3 | |
| | 011 | 4 | |
| | 111 | 5 | |
| | 110 | 6 | |
| | 100 | 7 | |
| | 000 | 8 | |
| 6 Positionen | 001 | 1 | 180 – 240° |
| | 011 | 2 | |
| | 111 | 3 | |
| | 110 | 4 | |
| | 100 | 5 | |
| | 000 | 6 | |
| 5 Positionen | 001 | 1 | 216 – 288° |
| | 011 | 2 | |
| | 110 | 3 | |
| | 100 | 4 | |
| | 000 | 5 | |
| 4 Positionen | 001 | 1 | 270 – 360° |
| | 010 | 2 | |
| | 100 | 3 | |
| | 000 | 4 | |

...

Tabelle 2

N = 4 Pseudo-Random-Folgen

| Periodenlänge | Folge | Erkennung nach ° NW |
|---|---|---|
| 16 | 0  1 1 0 1 0 1 1 1 0 0 0 0         1 0 0  1 1 0  ... | 90.0 – 113.5° |
| 15 | 0  1 1 0 1 0 1 1 1 0 0 0 0        1 0 0  1 1 0  ... | 96.0 – 120.0° |
| 14 | 0  1 1 0 1 0 1 1 1  0 0 0        1 0 0  1 1 0  ... | 103.8 – 128.0° |
| 13 | 1 0 1 0 1 1 1 0 0 0 0  1       1 0 1  ... | 110.0 – 138.0° |
| 12 | 1 0 1 0 1 1 1 0 0 0  1       1 0 1  ... | 120.0 – 150.0° |
| 11 | 1 0 1 0 1 1 1  0 0 0   1       1 0 1  ... | 131.0 – 164.0° |
| 10 | 1 1      1 1      1 0 0  1 1 | 144.0 – 180.0° |
| 9 | 1 1      1  0 0 0  1 0 0  1 1  ... | 160.0 – 200.0° |
| 8 | 1      1 1 0 0 0 0 1      1  ... | 180.0 – 225.0° |

EP 0 506 669 B1

Tabelle 3

Beispiel: N = 2 Pseudo-Random-Folge:

...          0   1   1   0        0    ...

Periodenlänge

= 360° NW

Registerinhalt-          Erkennung nach ° NW

4 Positionen          00                    180 – 270°

01

11

10

**Patentansprüche**

1.  Geber zur Zylindererkennung und/oder Nockenwellenstellungserkennung mit einem ersten Sensor (13), der eine mit der Nockenwelle einer Brennkraftmaschine verbundene erste Geberscheibe (10) mit einer Anzahl von Markierungen (11) abtastet, mit einem zweiten Sensor (17), der eine mit einer zweiten Welle der Brennkraftmaschine verbundene zweite Geberscheibe (15) abtastet und einer Auswerteschaltung, die mit beiden Sensoren (13, 17) verbunden ist, dadurch gekennzeichnet, daß die Geberscheiben (10, 15) und die Auswerteschaltung (14) derart ausgebildet sind, daß aus den Ausgangssignalen der beiden Sensoren (13, 17) ein wählbarer Pseudo-Random-Code als eine Folge von Nullen und Einsen darstellbar ist, und daß ein Register geeigneter Länge (15) und/oder ein Rechner (19) vorhanden ist, mit dem/denen diese Folge zur Lageerkennung auswertbar ist.

2.  Geber nach Anspruch 1, dadurch gekennzeichnet, daß der Pseudo-Random-Code eine Folge ...0110... ist und als Register ein Zwei-Bit-Register vorgesehen ist.

3.  Geber nach Anspruch 1 oder 2, dadurch gekennzeichnet, daß der Pseudo-Random-Code eine Folge ...00101110... ist und als Register (15) ein Drei-Bit-Register vorgesehen ist.

4.  Geber nach Anspruch 1 oder 2, dadurch gekennzeichnet, daß der Pseudo-Random-Code eine Folge mit einer Periodenlänge von 8 bis 16 Elementen ist und als Register (15) ein Vier-Bit-Register vorgesehen ist.

5.  Verfahren zur Zylindererkennung, dadurch gekennzeichnet, daß ein Geber nach einem der vorhergehenden Ansprüche eingesetzt wird und der Pseudo-Random-Code nach dem Phasenmodulationsverfahren dargestellt wird.

6.  Verfahren zur Zylindererkennung, dadurch gekennzeichnet, daß ein Geber nach einem der Ansprüche 1 bis 4 eingesetzt wird und der Pseudo-Random-Code nach der Codit-Mark-Inversion Methode oder einem beliebigem anderen Modulationsverfahren dargestellt wird.

## Claims

1. Transmitter for cylinder detection and/or detecting the positions of camshafts, having a first sensor (13) which senses a first transmitter disc (10) which is connected to the camshaft of an internal combustion engine and has a number of marks (11), having a second sensor (17) which senses a second transmitter disc (15) which is connected to a second shaft of the internal combustion engine, and having an evaluation circuit which is connected to both sensors (13, 17), characterized in that the transmitter discs (10, 15) and the evaluation circuit (14) are constructed in such a way that a selectable pseudo-random code obtained from the output signals of the two sensors (13, 17) can be represented as a sequence of zeros and ones, and in that a register (15) of suitable length and/or a computer (19) is present with which this sequence can be evaluated for position detection.

2. Transmitter according to Claim 1, characterized in that the pseudo-random code is a ...0110... sequence and a two-bit register is provided as register.

3. Transmitter according to Claim 1 or 2, characterized in that the pseudo-random code is a ...00101110... sequence and a three-bit register is provided as register (15).

4. Transmitter according to Claim 1 or 2, characterized in that the pseudo-random code is a sequence with a period length of 8 to 16 elements and a four-bit register is provided as register (15).

5. Method for cylinder detection, characterized in that a transmitter according to one of the preceding claims is used, and the pseudo-random code is represented according to the phase-modulation method.

6. Method for cylinder detection, characterized in that a transmitter according to one of Claims 1 to 4 is used, and the pseudo-random code is represented according to the codit-mark inversion method or any other modulation method.


## Revendications

1. Capteur servant à détecter la position d'un cylindre de l'arbre à cames avec un premier détecteur (13) qui palpe un premier disque de capteur (10) relié à l'arbre à cames d'un moteur à combustion interne, par un certain nombre de marquages (11), avec un deuxième détecteur (17) qui palpe un deuxième disque de capteur (15) relié à un second arbre du moteur à combustion interne, et avec un circuit d'exploitation qui est relié aux deux détecteurs (13, 17), capteur caractérisé en ce que les disques de capteur (10, 15) et le circuit d'exploitation (14) sont constitués de telle façon que l'on puisse représenter, à partir des signaux de sortie des deux détecteurs (13, 17), un code pseudo-aléatoire pouvant être sélectionné sous la forme d'une série de zéros et de uns, et en ce qu'il y a un registre d'une longueur appropriée (15) et/ou un calculateur (19) avec lequel/lesquels on peut exploiter cette série pour une détection de position.

2. Capteur selon la revendication 1, caractérisé en ce que le code pseudo-aléatoire est une série ...0110... et on prévoit comme registre un registre à deux bits.

3. Capteur selon la revendication 1 ou 2, caractérisé en ce que le code pseudo-aléatoire est une série ...00101110... et on prévoit comme registre (15) un registre à trois bits.

4. Capteur selon la revendication 1 ou 2, caractérisé en ce que le code pseudo-aléatoire est une série à longueur de période de huit à seize éléments, et on prévoit comme registre (15) un registre à quatre bits.

5. Procédé pour détecter la position d'un cylindre, caractérisé en ce que l'on monte un capteur selon l'une des revendications précédentes et on représente le code pseudo-aléatoire selon le procédé de modulation de phase.

6. Procédé pour détecter la positon d'un cylindre, caractérisé en ce que l'on utilise un capteur selon l'une des revendications 1 à 4 et on représente le code pseudo-aléatoire selon la méthode CMI (Code-Mark-Inversion) ou selon n'importe quel autre procédé de modulation.

FIG.1

# FIG. 2

0 | 0   0   1   0   1   1   1   0 | 0   0   1   0   1   1   1   0

0°      90° 135° 180°      315° 360°

# FIG. 3

| 0 | 0 | 1 | 0 | 1 | 1 | 1 | 0 |

0°    45°   90°   135°   180°      315°   360°

# FIG. 4

13   0     0     1     0     1     1     1     0     0     0

17

0°    45°    90°    135°   180°   225°   270°   315°   360°

# FIG. 5

0°         180°         360°         540°         720° KW

NW

0°    Sensor 1     90°        180°        270°        360°

KW

0°    Sensor 2     180°        360°        540°        720°

EP 0 506 669 B1